# EUROPÄISCHE PATENTANMELDUNG

(11) **EP 1 847 520 A2**
(43) Veröffentlichungstag der Anmeldung: **24.10.2007**
(21) Anmeldenummer: 07007828.2
(22) Anmeldetag: 17.04.2007
(51) Int. Cl.: C05F 17/00, C05F 17/02

(54) **Verfahren und Vorrichtung zur Kompostierung von organischen Abfällen im Rottetunnel**

(30) Priorität: 20.04.2006 DE 102006018387; 18.05.2006 DE 102006023482
(71) Anmelder: LINDE-KCA-Dresden GmbH, 01277 Dresden (DE)
(72) Erfinder: Pilz, Gerhard, 4470 Enns (AT)

(57) **Zusammenfassung**

Die Erfindung betrifft ein Verfahren und eine Vorrichtung zur Kompostierung von nassen organischen Abfällen mit geringem Luftporenvolumen im Rottetunnel unter wechselnder Luftzufuhr über einen Spaltboden und Luftabfuhr über mindestens eine Öffnung in der Decke. Der organische Abfall (R) wird vermischt mit schon verrottetem und entwässertem Abfall gleichmäßig in den Rottetunnel eingebracht (7), wodurch ein relativ homogener Einsatz mit nahezu gleichverteiltem Feuchtigkeitsgehalt erzeugt wird. Die Luftzufuhr (5) und -abfuhr (2,3) erfolgt ebenso wie die Regulation des Wasserhaushaltes (1,6) über den Spaltboden (5, 6) bzw. Ein- und Auslässe an der Decke (1, 2, 3). Die Umluft (3) wird mit Sauerstoff (O₂) angereicherter Frischluft (4) vermischt, so dass die Zuluft (5) immer einen überstöchiometrischen Sauerstoffanteil aufweist. Zusätzlich wird die Zuluft (5) über einen Wärmetauscher (W) auf über 60°C angewärmt. Die Öffnungen im Spaltboden, über die die Luft in den Rottetunnel geführt wird, weisen einen Querschnitt von weniger als 15mm auf.

## Beschreibung

Die Erfindung betrifft ein Verfahren zur Kompostierung von nassen organischen Abfällen mit geringem Luftporenvolumen im Rottetunnel unter wechselnder Luftzufuhr über einen Spaltboden und Luftabfuhr über mindestens eine Öffnung in der Decke, sowie eine Vorrichtung zur Durchführung des Verfahrens.

Die aerobe Verrottung von organischem Abfall erfolgt durch Mikroorganismen, vor allem aerobe und fakultativ anaerobe Bakterien, Strahlenpilze oder Schimmelpilze, die sämtlich bereits im Abfall vorhanden sind (zum Beispiel enthält 1 g Müllklärschlamm mehrere Milliarden Keime). Die Mikroorganismen zersetzen den Abfall unter Sauerstoffverbrauch in Wasser und Kohlendioxid, wobei sie einerseits geringe Teile der organischen Kohlenstoffe für ihren Baustoffwechsel und anderseits den überwiegenden Teil für ihren Betriebsstoffwechsel und somit zur Energiegewinnung verwenden. Die freiwerdende chemische Energie tritt als Wärme auf und führt zur Selbsterhitzung des Abfalls. Die Verrottung erfolgt in drei Phasen, einer Anlaufphase mit einer starken Vermehrung von mesophilen Mikroorganismen bis zu einer Selbsterhitzungstemperatur von 45°C, einer Phase der thermophilen Mikroorganismen mit einer starken Vermehrungsrate zwischen 45°C und 55°C und einer Abkühlungsphase mit einer erneuten Vermehrung der mesophilen Mikroorganismen. Oberhalb einer Temperatur von 55°C bis 75°C nehmen die Keimzahlen kontinuierlich ab. Die Dauer der Verrottung ist von der Zusammensetzung des Abfalls, dem Sauerstoffgehalt und dem Wassergehalt im Abfall abhängig.

Ein bewährtes und bereits zahlreich patentiertes Verfahren (DE1592782, DE198196687, DE3204471, DE19513701, US3523012, EP0621248) zur Durchführung einer Kompostierung von organischem Abfall ist der Rottetunnel, ein geschlossenes und druckbelüftetes automatisiertes Reaktorverfahren. Der Rottetunnel eignet sich zur aeroben Behandlung von gemischten Haushaltsabfällen und problematischen Stoffen, wie Großküchenabfällen, Klärschlamm und Abfällen aus der Tierhaltung, ebenso wie zur Nachbehandlung von Gärresten und zur Stabilisierung von Restabfall. Nach dem Stand der Technik wird das Abfallmaterial in den Rottetunnel eingebracht und dort über Luftzufuhr / Luftabfuhr Verfahren belüftet, wobei die Luft meist über einen Spaltboden, Kaminrohre oder Düsen im Boden zugeführt und über ähnliche Vorrichtungen an der Decke abgeführt wird. Ebenso verfügt der Rottetunnel über Einrichtungen zur Be- und Entwässerung des Abfallmaterials sowie zur Beschickung des Tunnels mit dem Abfallmaterial. Alle Vorgänge im Rottetunnel sind nach dem Stand der Technik über verschiedene Messfühler und Kreislaufführung der Prozesse automatisiert.

Schwierigkeiten bei der Verrottung mit dem Rottetunnel ergeben sich nach dem Stand der Technik bei der Behandlung von nassen organischen Abfällen mit einem geringen Luftporenvolumen wie Klärschlamm oder entwässerte Gärreste. Für die optimale Prozess- und Verfahrenssteuerung ist nach dem Stand der Technik die Zugabe von Strukturmaterial wie zum Beispiel zerkleinerter frischer Baumschnitt oder Strauchschnitt, Holzschnitzel oder ähnliches erforderlich, um das effektive Luftporenvolumen zu erhöhen (zum Beispiel DE3805864). Dieses Strukturmaterial ist nicht an allen Standorten in den erforderlichen Mengen verfügbar und muss somit unter Zusatzkosten beschafft werden. Zusätzlich werden die physikalischen Eigenschaften des Abfallmaterials verändert, was die Einhaltung der Ablagerungsparameter der Deponien erschwert und eine Vergrößerung der erforderlichen Reaktorvolumina zur Folge hat. Auch verfügen die Reststoffe aus anaeroben Prozessen wie entwässerter Gärschlamm über ein geringeres Selbsterhitzungspotential, so dass die Trocknung erschwert und die erforderliche Belüftbarkeit eingeschränkt bzw. sehr ungleichmäßig wird.

Der vorliegende Erfindung liegt die Aufgabe zugrunde ein Verfahren der eingangs erwähnte Art sowie eine Vorrichtung zur Durchführung des Verfahrens derart auszugestalten, dass nasse organische Abfälle mit einem geringem Luftporenvolumen in einem Rottetunnel ohne die Zugabe von Strukturmaterial, welches extra beschafft werden muss und die physikalischen Eigenschaften des Abfallmaterials ändert, effektiv verrottet werden kann.

Diese Aufgabe wird verfahrensseitig erfindungsgemäß dadurch gelöst, dass die zu verrottenden organischen Abfällen vor der Einbringung in den Rottetunnel mit bereits verrottetem und getrocknetem organischen Abfall vermischt werden, die in den Rottetunnel zugeführte Luft auf eine Temperatur von über 60°C vorgewärmt und überstöchiometrisch mit Sauerstoff angereichert wird.

Durch die Vermischung der organischen Abfälle mit bereits verrottetem und getrocknetem organischen Abfall gleicht sich der Wassergehalt des gesamten Einsatzmaterials des Rottetunnels aus. Das gesamte Material kann gleichmäßig belüftet werden und das effektive Luftporenvolumen erhöht sich, ohne dass die physikalischen Eigenschaften verändert werden. Ebenso ist bereits verrotteter und getrockneter Abfall an allen Standorten kostenlos und in ausreichender Menge verfügbar. Zur Verbesserung der Trocknung durch das geringe Selbsterhitzungspotential der Klärschlämme und Gärreste wird die zugeführt Luft erfindungsgemäß mit einem Wärmetauscher auf eine Temperatur von über 60°C vorgewärmt. Um den Mikroorganismen für ihren Stoffwechsel und somit fürdie Verrottung der biologischen Abfälle auch bei einem schlechten Luftporenvolumen genügend Sauerstoff zur Verfügung zu stellen, erfolgt eine überstöchiometrische Anreicherung der zugeführten Luft mit Sauerstoff.

Zweckmäßigerweise wird das Einsatzmaterial schichtweise, gleichmäßig und vorzugsweise automatisch in den Rottetunnel eingebracht, wodurch ein relativ homogener Einsatz mit nahezu gleichverteiltem Feuchtigkeitsgehalt entsteht. Bei sehr nassen und feinkörnigen Abfällen ist es vorteilhaft, dass die Luftzufuhr über Öffnungen mit einem Querschnitt von weniger als 15mm erfolgt. Dadurch wird das Durchrutschen des Abfalls und das damit einhergehende Zusetzen der Luftzufuhr verhindert.

Vorrichtungsseitig wird die gestellte Aufgabe dadurch gelöst, dass die Vorrichtung eine Einrichtung zur Mischung der zu verrottenden organischen Abfälle mit bereits verrottetem und getrocknetem organischen Abfall, einen Wärmetauscher zur Anwärmung der in den Rottetunnel zugeführten Luft auf über 60°C und eine Zuführung von Sauerstoff in die Luftzuführung des Spaltbodens aufweist.

In einer bevorzugten Ausführungsform der Erfindung weist die Vorrichtung eine Einrichtung zum schichtweisen, gleichmäßigen und vorzugsweise automatischen Einbringen des Einsatzmateriales in den Rottetunnel auf. Zweckmäßigerweise haben die Öffnungen des Spaltbodens einem Querschnitt von weniger als 15mm, wodurch ein Durchrutschen von sehr nassem und feinkörnigem Abfall verhindert wird. In einer weiteren Ausgestaltung der Erfindung ist auf einem Spaltboden mit Öffnungen mit einem Querschnitt von über 15mm ein Lochblech mit Löchem kleiner als 15mm angebracht.

Mit der Erfindung gelingt es insbesondere, nasse organische Abfälle mit geringem Luftporenvolumen ohne die Zugabe von Strukturmaterial und die damit verbundenen Änderungen der physikalischen Eigenschaften des Abfallmaterials effektiv zu kompostieren. Eine Erhöhung der Verfahrenskosten durch die Zugabe von Strukturmaterial wird folglich vermieden. Eine Einrichtung zur überstöchiometrischen Anreicherung der Luft mit Sauerstoff lässt sich einfach und kostengünstig in die Anlage integrieren.

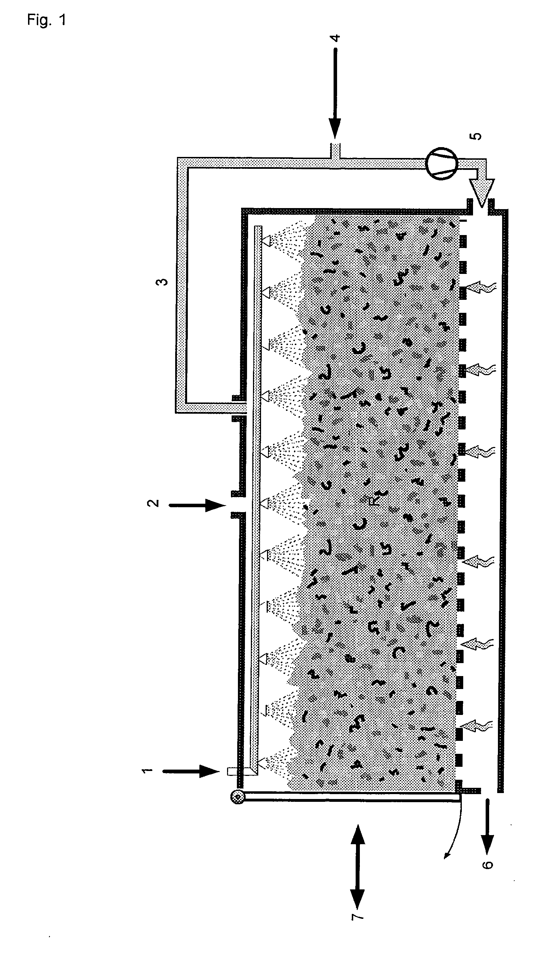

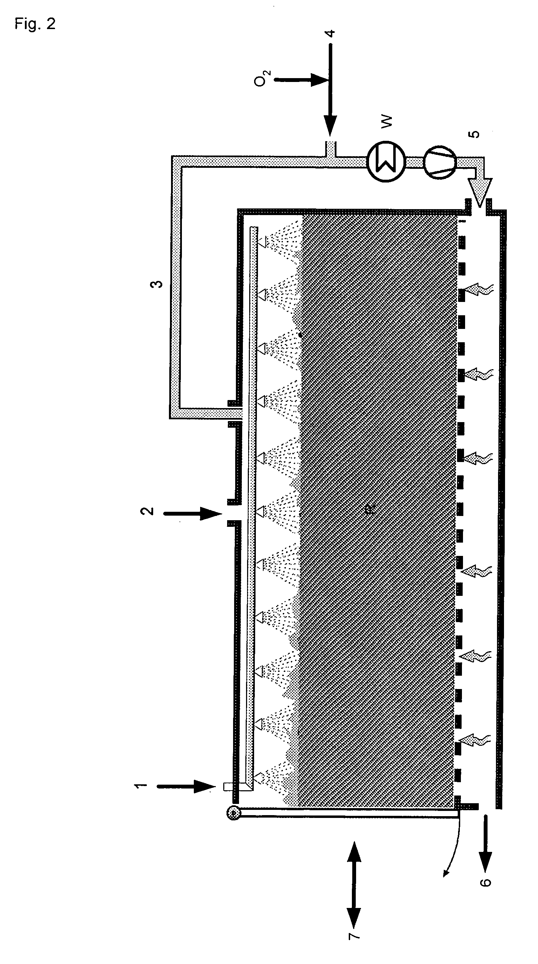

Im Folgenden soll die Erfindung anhand eines in der Figur 2 dargestellten Ausführungsbeispiels der Erfindung näher erläutert und mit einem in Figur 1 dargestellten Rottetunnel nach dem Stand der Technik verglichen werden.

Es zeigen
- Figur 1: Rottetunnel nach dem Stand der Technik
- Figur 2: Ausführungsbeispiel der Erfindung

Figur 1 zeigt einen Rottetunnel nach dem Stand der Technik. Der mit Strukturmaterial vermischte organische Abfall (R) wird unter Luftzufuhr (5) und -abfuhr (2,3) im Rottetunnel kompostiert. Ein Teil der abgeführten Luft wird als Umluft (3) mit Frischluft (4) vermischt und erneut den Rottetunnel zugeführt. Die Regulierung des Wasserhaushaltes erfolgt über den Zulauf an der Decke (1) und den Abfluss am Boden (6). Das Be- und Entladen des Rottetunnels erfolgt seitlich (7).

Figur 2 zeigt eine Ausgestaltung der Erfindung. Der organische Abfall (R) wird vermischt mit schon verrottetem und entwässertem Abfall gleichmäßig in den Rottetunnel eingebracht (7), wodurch ein relativ homogener Einsatz mit nahezu gleichverteiltem Feuchtigkeitsgehalt erzeugt wird. Die Luftzufuhr (5) und -abfuhr (2,3) erfolgt ebenso wie die Regulation des Wasserhaushaltes (1,6) über den Spaltboden (5, 6) bzw. Ein- und Auslässe an der Decke (1, 2, 3). Die Umluft (3) wird mit Sauerstoff (O₂) angereicherter Frischluft (4) vermischt, so dass die Zuluft (5) immer einen überstöchiometrischen Sauerstoffanteil aufweist. Zusätzlich wird die Zuluft (5) über einen Wärmetauscher (W) auf über 60°C angewärmt. Die Öffnungen im Spaltboden, über die die Luft in den Rottetunnel geführt wird, weisen einen Querschnitt von weniger als 15mm auf.

## Patentansprüche

1. Verfahren zur Kompostierung von nassen organischen Abfällen mit geringem Luftporenvolumen im Rottetunnel unter wechselnder Luftzufuhr über einen Spaltboden und Luftabfuhr über mindestens eine Öffnung in der Decke, **dadurch**
**gekennzeichnet, dass**
a) die zu verrottenden organischen Abfälle vor der Einbringung in den Rottetunnel mit bereits verrottetem und getrocknetem organischen Abfall vermischt werden,
b) die zur Verrottung in den Rottetunnel zugeführte Luft auf eine Temperatur von über 60 °C vorgewärmt wird und
c) die zur Verrottung in den Rottetunnel zugeführte Luft überstöchiometrisch mit Sauerstoff angereichert ist.

2. Verfahren nach Anspruch 1, **dadurch gekennzeichnet, dass** das Einsatzmaterial schichtweise, gleichmäßig und vorzugsweise automatisch in den Rottetunnel eingebracht wird.

3. Verfahren nach Anspruch 1 oder 2, **dadurch gekennzeichnet, dass** die Luftzufuhr über Öffnungen mit einem Querschnitt von weniger als 15mm erfolgt.

4. Vorrichtung zur Kompostierung von nassen organischen Abfällen mit geringem Luftporenvolumen im Rottetunnel mit einem Spaltboden zur Luftzufuhr und mindestens einer Öffnung in der Decke zur Luftabfuhr, **dadurch gekennzeichnet, dass** die Vorrichtung
a) eine Einrichtung zur Mischung der zu verrottenden organischen Abfälle mit bereits verrottetem und getrocknetem organischen Abfall,
b) einen Wärmetauscher zur Anwärmung der in den Rottetunnel zugeführten Luft auf über 60°C und
b) eine Zuführung von Sauerstoff in die Luftzuführung des Spaltbodens aufweist.

5. Vorrichtung nach Anspruch 4, **dadurch gekennzeichnet, dass** die Vorrichtung eine Einrichtung zum schichtweisen, gleichmäßigen und vorzugsweise automatischen Einbringen des Einsatzmateriales in den Rottetunnel aufweist.

6. Vorrichtung nach Anspruch 4 oder 5, **dadurch gekennzeichnet, dass** die Öffnungen des Spaltbodens einem Querschnitt von weniger als 15mm aufweisen.

7. Vorrichtung nach Anspruch 4 oder 5, **dadurch gekennzeichnet, dass** auf einem Spaltboden mit Öffnungen mit einem Querschnitt von über 15mm ein Lochblech mit Löchem kleiner als 15mm angebracht ist.
